# EUROPÄISCHE PATENTANMELDUNG

(11) **EP 3 760 352 A1**
(43) Veröffentlichungstag der Anmeldung: **06.01.2021**
(21) Anmeldenummer: 20182322.6
(22) Anmeldetag: 25.06.2020
(51) Int. Cl.: B23B 31/171, B23B 31/16, B23Q 3/06

(54) **AUSGLEICHSSPANNFUTTER ZUM SPANNEN VON WERKSTÜCKEN FÜR BEARBEITUNGSZENTREN**

(30) Priorität: 01.07.2019 DE 102019004527
(71) Anmelder: Steinberger, Josef, 40231 Düsseldorf (DE); Stolzenberg, Hans, 41325 Korschenbroich (DE); Strathmann, Heinz-Josef, 41352 Korschenbroich (DE)
(72) Erfinder: Steinberger, Josef, 40231 Düsseldorf (DE); Stolzenberg, Hans, 41325 Korschenbroich (DE); Strathmann, Heinz-Josef, 41352 Korschenbroich (DE)
(74) Vertreter: Demski, Siegfried

(57) **Zusammenfassung**

Die Erfindung betrifft eine Vorrichtung (1) zum Spannen von Werkstücken beliebiger Spannformen, insbesondere für Bearbeitungszentren, umfassend zumindest einen Grundkörper (9) mit über eine Spindel (29) oder einen Hydraulikzylinder (61) verstellbaren Spannbacken (4, 5, 6, 7; Fig. 1), welche in einer Führung (8; Fig. 1) einliegend radial beweglich angeordnet sind. Um eine gleichmäßige Einspannung eines Werkstückes zu gewährleisten erfolgt eine radiale Verstellung der Spannbacken (4, 5, 6, 7) über zwei Spannringe (12, 13), welche relativ zueinander verdrehbar angeordnet sind, wobei eine Kraftübertragung von einem Treibring (11) durch mindestens ein Koppelelement (20) erfolgt.

## Beschreibung

Die Erfindung betrifft eine Vorrichtung zum Spannen von Werkstücken beliebiger Spannformen, insbesondere für Bearbeitungszentren, umfassend zumindest einen Grundkörper mit über eine Spindel oder einen Hydraulikzylinder verstellbaren Spannbacken, welche in einer Führung einliegend radial beweglich angeordnet sind.

Spannvorrichtungen werden überall dort benötigt, wo Werkstücke durch beispielsweise Drehbänke oder Fräsmaschinen bearbeitet werden müssen. Hierbei kann es sich um Werkstücke mit quadratischer, rechteckiger oder beliebiger Spannform handeln. Fräsmaschinen werden hierbei hauptsächlich für Fräs- oder Bohrarbeiten eingesetzt, Drehzentren vorzugsweise zur Bearbeitung von runden Werkstücken. Beide Maschinentypen benötigen hierbei unterschiedliche Spannmittel. Die Spannvorrichtung für Drehbänke werden elektromotorisch angetrieben und drehen sich somit mit dem Werkstück, während bei Fräszentren oder Bearbeitungszentren zum Spannen von Werkstücken Spannmittel eingesetzt werden, die dreh- und ortsfest gehalten werden.

Aufgrund der Tatsache, dass moderne Maschinen, und zwar spezielle Fräsmaschinen auch Dreharbeiten mit hoher Genauigkeit durchführen können, werden beispielsweise immer mehr Arbeiten von Drehmaschinen durch Fräsmaschinen übernommen.

Hierbei ist es wichtig, dass das Werkstück exakt positioniert und gegen die Zerspanungskräfte abgestützt wird, damit die zulässigen Abweichungen für die verschiedenen Bearbeitungsoperationen eingehalten werden können. Geht man vom gewalzten Vierkantmaterial aus, so sind die Seitenlängen durch die Walztoleranzen beispielsweise voneinander verschieden und müssen bei einer Spannvorrichtung entsprechend berücksichtigt werden. Bei Metallen, die eine hohe Steifigkeit haben, führen schon geringe Unterschiede dazu, dass nur die größte Seite fest eingespannt ist und die zweite kleinere Seite nicht mehr zentriert und mit der gleichen Kraft festgehalten wird. Hierdurch kann das Problem entstehen, dass das Werkstück innerhalb der Spannvorrichtung durch die auszuführenden Arbeiten bewegt wird und damit die Maßhaltigkeit nicht mehr gewährleistet werden kann.

Aus dem Stand der Technik ist es hierzu bekannt Spannfutter mit Einzelverstellung der Spannbacken einzusetzen, welche aber einen deutlich erhöhten Arbeitsaufwand benötigen, da sämtliche Spannbacken einzeln eingestellt werden müssen. Hierbei geht die zentrische Ausrichtung zudem verloren, weil jede Backe einzeln von Hand angestellt wird und die Gewindespindeln untereinander nicht synchronisiert sind.

Des weiteren sind Vierbacken-Spannfutter bekannt bei denen die Backen zentrisch, also mit gleichen Wegen verfahren werden. Eine solche Spannvorrichtung ist beispielsweise von der Firma HWR gemäß Betriebsanleitung vom 11.03.2015 bekannt. Es handelt sich um ein ausgleichendes Vierbacken-Handspannfutter. Die Konstruktion des Vierbacken-Handspannfutters sieht hierbei vor, dass zwei gegenüberliegende Spannbacken zunächst einen Spannkontakt mit dem Werkstück herstellen und im Anschluss, dass die beiden weiteren gegenüberliegenden Spannbacken, welche beispielsweise um 90 Grad versetzt angeordnet sind ebenfalls eine Spannung mit dem Werkstück herbeiführen. Eine gleichzeitige Spannung durch alle vier Spannbacken ist nicht möglich und führt zu dem Nachteil, dass verformbare Werkstücke, wie beispielsweise Hohlprofile zu einer Deformation der Profile führen können, die durch das nachträgliche Nachspannen der beiden weiteren Spannbacken nicht mehr ausgeglichen werden können.

Hierbei ist im weiteren zu berücksichtigen, dass Positionsgenauigkeiten von 0,01 mm gefordert und eingehalten werden müssen. Um eine exakte Lage der Werkstücke beim Spannen zu erreichen ist Voraussetzung, dass die Verformungswege des Spannzeuges bei allen Backen gleich sind, da nur dann die gewünschte Lage zum Bearbeitungswerkzeug, zum Beispiel einem Fräser erreicht wird. Bei dem bekannten Modell der Firma HWR setzen sich die Backen über die krafterzeugenden Bauelemente in Bewegung, berühren das Werkstück und eine Spannkraft baut sich allmählich zunächst in einer Spannebene und anschließend in einer zweiten Spannebene auf. Da das Spannzeug elastisch ist treten Verformungswege auf, die möglichst an allen vier Spannbacken gleich sein sollten, damit das Zentrum der beiden Spannebenen A-A und B-B mit den sich kreuzenden Maschinenachsen X und Y übereinstimmt.

Speziell bei dem bekannten Futter der Firma HWR wird durch eine Gewindespindel eine Längskraft erzeugt, die auf die Triebelemente der Spannebene A-A direkt einwirkt und im Anschluss erst von den Elementen der Zentrierebene A-A die Kraft an die weitere Zentrierebene B-B weitergegeben wird. Somit entsteht zuerst der Verformungsweg für die Zentrierebene A-A und danach erst für die Zentrierebene B-B. Die einzelnen Spannebenen, welche senkrecht zueinander angeordnet sind, sind somit quasi in Reihe geschaltet und wirken nicht gleichzeitig bei der Einspannung. Durch die entstehende Verformung des Werkstückes können dadurch Zentrierungsungenauigkeiten entstehen, die unerwünscht sind.

Der vorliegenden Erfindung liegt die Aufgabenstellung zugrunde eine Vorrichtung zum Spannen von Werkstücke aufzuzeigen bei der eine gleichzeitige und gleichmäßige Spannung der Spannebenen A-A und B-B erfolgt.

Zur Lösung der Aufgabenstellung ist vorgesehen, dass eine radiale Verstellung der Spannbacken über zwei Spannringe erfolgt, welche relativ zueinander verdrehbar angeordnet sind, wobei eine Kraftübertragung von einem Treibring durch mindestens ein Koppelelement erfolgt. Weitere vorteilhafte Ausgestaltungen der Erfindung ergeben sich aus den Unteransprüchen.

Durch einen Treibring und zwei Spannringe, welche die Verstellung der Spannbacken ermöglichen wird erreicht, dass die Spannbacken nahezu zeitgleich an das Werkstück heranfahren können und eine Spannung aller vier Spannbacken nach der Anlage an das Werkstück ermöglichen. Durch diese Maßnahme wird insbesondere erreicht, dass eine Positionsverschiebung oder Deformierung des zu bearbeitenden Werkstückes ausgeschlossen werden kann. Die Spannwirkung tritt hierbei sowohl in der Spannebene A-A und der Spannebene B-B ein, sodass gleichzeitig eine Zentrierung des Werkstückes erfolgt, wobei aufgrund der gewählten Konstruktion die Spannkraft ausgehend von dem Treibring über Koppelelemente unmittelbar auf die Spannringe übertragen wird. Die Koppelelemente liegen hierbei in einer Ausnehmung der Treibringe ein und bewirken eine Verdrehung der Spannringe relativ zueinander in entgegengesetzter Richtung. Die Koppelelemente sind derart gestaltet, dass mit der Anlage zweier Spannbacken einer ersten Spannebene an das Werkstück zunächst keine Entfaltung einer erforderlichen Spannkraft erfolgt, sondern zunächst auf die weiteren Spannbacken der zweiten Spannebene B-B übertragen werden, sodass zunächst die vier Spannbacken zur Anlage an das Werkstück gelangen und im Anschluss mit zunehmender Steigerung der Spannkraft eine gleichmäßige Spannung der Werkstücke erfolgt.

In diesem Fall werden zwei Spannringe eingesetzt, die eine radiale Ausnehmung aufweisen, in der der Treibring zu liegen kommt, sodass die Bauhöhe insgesamt sehr niedrig gehalten werden kann und damit die Vorrichtung zum Spannen von Werkstücken eine äußerst flache Bauweise aufweist. Eine solche Vorrichtung eignet sich beispielsweise hervorragend für Fräsmaschinen.

Zur Übertragung der Spannkraft von dem Treibring auf die Spannringe reicht ein Koppelelement aus, jedoch werden in der Regel zumindest zwei gegebenenfalls auch mehrere Koppelelemente eingesetzt, welche jeweils gleichmäßig in einem Winkelabstand zueinander versetzt zur Kraftübertragung eingesetzt werden. Durch eine höhere Anzahl von Koppelelementen wird hierbei erreicht, dass eine gleichmäßige Kraftübertragung auf die Spannringe erfolgen kann.

In Ausgestaltung der Erfindung ist vorgesehen, dass die Koppelelemente in einer Ausnehmung des Treibringes einliegen und mit zwei radial hervorstehenden Anformungen in Aufnahmetaschen der Spannringe eingreifen, wobei die Anformung diametral entgegengesetzt unter einem Winkel von 180 Grad angeordnet sind. Die Koppelelemente weisen hierbei vorzugsweise einen runden Grundkörper auf, an dem die beiden radial hervorstehende Anformungen einstückig angeformt sind, welche bei einer Drehung des Koppelelementes über die Anformungen die Kraft auf die Spannringe übertragen. Zu diesem Zweck sind die Anformungen der Koppelelemente in Aufnahmetaschen der Spannringe gelagert und können eine Drehbewegung des Treibringes unmittelbar auf die Spannringe übertragen.

Der besondere Vorteil liegt hierbei darin, dass die Koppelelemente jeweils in einer Aufnahmetasche der beiden Spannringe einliegen und bei Verdrehung des Treibringes eine entgegengesetzte Bewegung beider Spannringe erfolgt. Bei einer erhöhten Gegenkraft eines Spannringes wird die auf die zweiten Spannringe einwirkende Kraftkomponente erhöht, da die Koppelelemente sich zusammen mit dem Treibring gegenüber den beiden Spannringen bewegen können. Erst wenn sämtliche durch die Spannringe angetriebenen Spannbacken zur Anlage an das Werkstück gelangt sind, wird allmählich die erforderliche Spannkraft durch die erfindungsgemäße Vorrichtung aufgebaut, um das Werkstück sicher einzuspannen. Vorzugsweise bestehen die Anformungen hierbei aus einem einstückig angeformten Element, welches die Übertragung der Umfangskraft der Spannringe auf die Grundbacken durch einen Flächenkontakt ermöglicht.

Um durch den innenliegenden Spannring und außenliegenden Spannring eine annähernd gleiche Kraft auf die Spannbacken zu übertragen ist in weiterer bevorzugter Ausgestaltung der Erfindung vorgesehen, dass die Koppelelemente mit jeweils zwei Anformungen mit unterschiedlicher radialer Länge ausgestattet sind. Durch die unterschiedliche radiale Länge der Anformungen wird erreicht, dass über den jeweiligen Dreharm der Koppelemente unterschiedliche Kräfte auf die Spannringe übertragen werden. Die Länge der jeweiligen Anformungen berücksichtigt den radialen Abstand der beiden Spannringe gegenüber dem Mittelpunkt der Spannvorrichtung. Die zum Mittelpunkt gerichtete Anformung ist hierbei kürzer als die vom Mittelpunkt weggerichtete Anformung, sodass unter Berücksichtigung der entstehenden Hebelkräfte annähernd gleiche Umfangskräfte vorliegen, die für eine gleichmäßige Beaufschlagung der Klemmbacken ausschlaggebend sind. Ein Längenverhältnis der Anformung kann beispielsweise bei 1:2 oder 1:3 liegen, um den radialen Abstand zum Mittelpunkt auszugleichen.

Der Vorteil dieser Vorgehensweise besteht darin, dass eine hohe Zentriergenauigkeit erzielt wird und durch die Koppelelemente ein Ausgleich bei der Spannung erfolgt, sodass auf das Werkstück gleiche Spannkräfte einwirken, wodurch ungleiche Verformungswege vermieden werden. Die auftretenden Radialkräfte der Spannbacken zentrieren das Werkstück und halten es sicher gegen die Zerspanungskräfte unverrückbar auf dem Bearbeitungstisch fest. Durch die exakte Lage des zu bearbeitenden Werkstückes wird hierbei zudem erreicht, dass die Spannkontur genau mit der zu bearbeitenden Kontur übereinstimmt. Durch eine hohe Wiederholgenauigkeit des Spannsystems wird ferner das zuverlässige und genaue Einspannen bei einer Serienfertigung gewährleistet.

Um eine niedrige Bauhöhe zu erreichen ist der Treibring in zwei Ausnehmungen der Spannringe gelagert, sodass die gesamte Aufbauhöhe nur durch die Höhe der Spannringe vorgegeben wird. Durch die Einleitung und Erzeugung der Kraft in waagerechter Richtung zum Werkstück und parallel zum Maschinentisch wird damit eine wesentlich geringere Bauhöhe erzielt, die den Arbeitsraum in Z-Richtung der Maschine wesentlich vergrößert und in keinem Fall einschränkt. Somit können höhere Werkstücke mit der Spannvorrichtung gehalten und bearbeitet werden. Zudem liegen die auftretenden Bearbeitungskräfte näher an den abzustützenden Führungen der Maschine, wodurch eine Serienfertigung mit entsprechender Wiederholungsgenauigkeit der Werkstücke bei höheren Zerspanungsleistungen erreicht wird.

In weiterer Ausgestaltung der Erfindung ist vorgesehen, dass der Treibring über einen Zapfen der Verstelleinrichtung verdrehbar ist, welcher in einer Zapfenaufnahme einliegt, welche in einer radialen Ausnehmung des Treibringes einliegt und die Bewegung des Treibringes über die Koppelelemente auf die Spannringe übertragbar ist. Der für die Spannringe erforderliche Treibring wird hierbei über den Zapfen der Verstelleinrichtung verdreht, welcher in einer Zapfenaufnahme des Treibringes einliegt, wobei die Zapfenaufnahme in einer radialen Ausnehmung des Treibringes einliegt. Bei der Verstelleinrichtung handelt es sich um eine Gewindelspindel, welche von außen betätigt werden kann und dazu führt, dass der Zapfen auf der Gewindespindel bewegt werden kann. Aufgrund des Eingreifens des Zapfens in die Zapfenaufnahme wird der Treibring somit bei einer axialen Bewegung des Zapfen auf der Spindel verdreht und führt dazu, dass durch die Verdrehung Spannkräfte auf die Spannringe übertragen werden können. Zur weiteren Automatisierung kann die Gewindespindel beispielsweise durch einen Hydraulik-Zylinder ersetzt werden.

Die Verstelleinrichtung kann hierbei über eine Verzahnung des Treibringes und einer korrespondierenden Verzahnung der Verstelleinrichtung bewegt werden oder es wird eine Zahnstange verwendet, welche über eine Gewindespindel oder einen Hydraulikzylinder bewegbar ist. Alternativ besteht die Möglichkeit, dass die Verstelleinrichtung über eine Gewindespindel oder einen Hydraulikzylinder antreibbar ist und einen Zapfen aufweist, welcher axial zur Gewindespindel oder dem Hydraulikzylinder bewegbar ist. Die hierbei verwendeten Koppelelemente weisen zwei Anformungen auf, welche einen unterschiedlichen Abstand zum Drehpunkt der Koppelelemente aufweisen, sodass unter Berücksichtigung des radialen Abstandes zum Zentrum der Spannvorrichtung annähernd gleiche Kräfte über die Koppelelemente auf die Spannringe übertragen werden.

In weiterer Ausgestaltung der Erfindung ist vorgesehen, dass zur Kraftübertragung auf die Spannbacken die Spannringe mit kreisförmigen Bogensegmenten bestückt sind, welche jeweils einem Kraftübertragungselement zugeordnet und gegenüber der Umfangsfläche der Spannringe unter einem Winkel angeordnet sind. Zur Kraftübertragung von den Spannringen auf die Spannbacken dienen die kreisförmigen Bogensegmente, und zwar jeweils ein Bogensegment für ein Kraftübertragungselement. Um eine radiale Spannkraft zu erzeugen sind die Bogensegmente hierbei gegenüber der Umfangsfläche der Spannringe unter einem Winkel angeordnet, damit die Drehbewegung der Spannringe in eine radiale Bewegung der Spannbacken umgesetzt werden kann. Durch die kreisförmigen Bogensegmente wird darüber hinaus eine geringe Flächenpressung erzielt, die eine hohe Kraftübertragung und große Lebensdauer ermöglichen.

Die den Spannringen zugeordneten Bogensegmente dienen zur Führung eines Kulissensteins, welcher als Kraftübertragungselement eingesetzt wird. Der Kulissenstein ist hierbei rund ausgeführt und in einer runden Ausnehmung der Spannringe aufgenommen, wobei der Kulissenstein im weiteren eine entsprechend der Größe der kreisförmigen Bogensegmente angepasste Aussparung aufweist. Durch den Winkel der Bogensegmente gegenüber der Umfangsfläche der Spannringe wird somit eine Kraftübertragung auf die Kulissensteine vorgenommen, welche dazu führt, dass die Spannbacken, und zwar die Grundbacke radial bewegt werden kann. Eine tangentiale Bewegung der Spannringe führt somit dazu, dass sich der Abstand der Kulissensteine gegenüber dem Zentrum der Spannvorrichtung kontinuierlich verändert und somit die erforderliche radiale Bewegung erreicht wird.

Grundsätzlich bestehen hierbei die Spannbacken aus einer Grundbacke und einer Aufsatzbacke, wobei die Grundbacken mithilfe der Spannringe radial bewegt werden und die Aufsatzbacken entsprechend den zu bearbeitenden Werkstücken angepasst und ausgetauscht werden können.

Zur Verbindung der Grundbacke mit der Aufsatzbacke sind beide mit einer T-Nut ausgestattet, in welche zumindest ein Nutenstein eingreift. Dieser Nutenstein ist ausschließlich zur Befestigung der Aufsatzbacke auf der Grundbacke vorgesehen, wodurch bei einer Bewegung der Grundbacke diese Bewegung automatisch auf die Aufsatzbacke übertragen wird. Um ein Verrutschen der Aufsatzbacke gegenüber der Grundbacke zu verhindern weisen diese eine Verzahnung auf.

Normalerweise könnte der Nutenstein einen T-förmigen Querschnitt aufweisen, der in die T-förmige Nuten eingesetzt wird. Zu diesem Zweck ist es aber erforderlich, dass zusätzlich die Aufsatzbacke mit der Grundbacke verschraubt wird, welches in der Regel rechtwinkling zur Anordnung der Grundbacke erfolgt. Durch diese Maßnahme tritt aber eine Einschränkung der Nutzbarkeit der Aufsatzbacke ein, die durch die Verwendung eines neuen Klemmelementes umgangen wird. Eine Verbindung zwischen Grundbacke und Aufsatzbacke wird hierbei über ein Klemmelement vorgenommen, welches innerhalb der T-förmigen Nuten einliegt, wobei das Klemmelement aus einem Keilelement besteht, welches zwischen Grundbacke und Aufsatzbacke durch ein Schraubbolzen festlegbar ist, wobei der Schraubbolzen annähernd parallel zur Grundbacke verläuft. Eine Außenfläche des Keilelementes dient hierbei als Andruckfläche zur Spannung mit der Aufsatzbacke und kommt in der T-förmigen Nut der Aufsatzbacken zur Anlage, während ein Unterteil des Klemmelementes in der unteren T-förmigen Nut der Grundbacke einliegt. Soweit das Keilelement mithilfe des Verstellbolzens bewegt wird, erfolgt eine Spannung der parallel zur T-förmigen Nut angeordneten Fläche des Keilelementes mit der Aufsatzbacke, und zwar über einen Großteil der Länge der Grundbacke und Aufsatzbacke, sodass eine entsprechend geringe Flächenpressung vorliegt. Durch das Klemmelement in Form eines Keilelementes wird hierbei eine kraft- und formschlüssige Verbindung zwischen der Grundbacke und der Aufsatzbacke hergestellt.

Um verschieden große Werkstücke mit gleichen Aufsatzbacken bearbeiten zu können, ist die Aufsatzbacke mit einer Verzahnung auf der Auflagefläche zur Grundbacke ausgestattet und die Grundbacke mit einer korrespondierenden Verzahnung ausgestattet, sodass die Aufsatzbacke im Rahmen der Verzahnung oder mehreren tangential angeordneten Nuten versetzt werden kann. Auf diese Weise kann der Abstand der Aufsatzbacke zum Zentrum verkleinert oder vergrößert werden je nachdem, welches Werkstück eingespannt werden soll.

In weiterer Ausgestaltung der Erfindung ist vorgesehen, dass zwischen dem inneren und äußeren Spannring ein Rastbolzen angeordnet ist, welcher aus zwei Endstücken mit einer stirnseitigen Spitze besteht, welche durch ein Federelement radial nach außen vorgespannt sind. Dadurch, dass sehr häufig Werkstücke bearbeitet werden, welche unterschiedliche Abmessungen in der Breite und Länge aufweisen müssen die Aufsatzbacken zusammen mit den Grundbacken über einen längeren Ausgleichsweg verfahren werden. In der Regel werden aber Werkstücke in einer größeren Stückzahl nacheinander bearbeitet, sodass es sinnvoll ist, dass die Backen in beiden Zentrierrichtungen sich nur geringfügig öffnen und den Austausch der Werkstücke ermöglichen. Hierbei sollen aber nach wie vor in beiden Zentrierrichtungen die vier Spannbacken gleichmäßig eine Kraft auf das Werkstück übertragen. Mit Hilfe eines Rastbolzens wird hierbei erreicht, dass eine relativ Verdrehung der beiden Spannringe quasi gespeichert wird und somit die vier Spannbacken gleichzeitig geöffnet, aber insoweit durch den Rastbolzen in dieser Position zueinander arretiert werden, sodass ein vergleichbares Werkstück sofort eingesetzt und mit einer geringen Umdrehungszahlung gespannt werden kann. Es handelt sich somit um die Speicherung einer Einstellung der beiden Spannringe, welche in einem begrenzten Winkelbereich gegenüber einer Grundstellung möglich ist. Soweit sich die Abmessungen der Werkstücke jedoch verändern, kann durch vollständiges Aufdrehen der Spannbacken die Relativverdrehung beider Spannringe aufgehoben und damit die Grundposition der Spannbacken wieder eingenommen werden.

Der Rastbolzen weist zu diesem Zweck zwei Kopfelemente mit einer stirnseitigen Spitze auf und wird durch ein Federelement radial nach außen vorgespannt, während der innere und äußere Spannring mit Rastungen auf den einander zugewandten Umfangsflächen ausgestattet ist, in welche der Rastbolzen mit seinen Spitzen einliegt.

Die vorliegende Erfindung zeichnet sich dadurch aus, dass eine Vorrichtung zum Spannen von Werkstücken vorgeschlagen wird, welche eine sehr niedrige Bauhöhe aufweist und somit die Bearbeitung auch von größeren Werkstücken in einem Bearbeitungszentrum ermöglicht. Vorzugsweise erfolgt das Einspannen hierbei auf Fräszentren oder Bearbeitungszentren. Soweit die Werkstücke Abweichungen von der theoretisch vorgegebenen Form aufweisen und eine Spannung an den Außenflächen beziehungsweise eine Zentrierung der Werkstücke bei gleicher Festhaltekraft an allen vier Seiten innerhalb der Spannvorrichtung in jedem Fall erreicht werden muss, wird erfindungsgemäß eine Verstellung der Spannbacken über zwei Spannringe vorgeschlagen, welche relativ zueinander verdrehbar angeordnet sind und mithilfe eines Treibringes zueinander bewegt werden können. Zur Kraftübertragung von dem Treibring auf die Spannringe wird hierbei ein Koppelelement verwendet, welches in einer runden Ausnehmung des Treibringes einliegt und mithilfe zwei hervorstehenden Anformungen in Aufnahmetaschen der Spannringe eingreift, um diese relativ zueinander in entgegengesetzter Richtung zu bewegen, wenn der Treibring verdreht wird. Die Verdrehung des Treibringes erfolgt hierbei über eine Verstelleinrichtung mit einer Gewindelspindel auf der ein Zapfen axial beweglich angeordnet ist, wobei der Zapfen in eine Ausnehmung des Treibringes eingreift und diesen verdreht.

Die Erfindung wird im Weiteren anhand der Figuren näher erläutert.

Es zeigt
- Fig. 1: in einer perspektivischen Ansicht eine Vorrichtung zum Spannen von Werkstücken,
- Fig. 2: in einer Draufsicht die vormontierten Spannringe mit Treibring und Koppelelementen,
- Fig. 3: in einer Draufsicht die vormontierten Spannringe mit Treibring und Koppelelemente mit einer alternativen Antriebsform,
- Fig. 4: in einer geschnittenen Ansicht die Spannringe mit Treibring und Koppelelementen mit einer Verstelleinrichtung in Form eines Spindelantriebs und in einem Teilschnitt eine zweite Lösung mit Hydraulikzylinder,
- Fig. 5: in einer geschnittenen Ansicht die Spannringe mit Treibring und Koppelelementen mit einer Verstelleinrichtung in Form eines Zahnsegmentes und einer Zahnstange,
- Fig. 6: in einer perspektivischen Ansicht die Spannringe mit Bogensegmenten,
- Fig. 7: in einer geschnittenen Draufsicht die Bogensegmente mit Kulissensteinen,
- Fig. 8: in einer perspektivischen Ansicht eine Grundbacke mit Kulissenstein,
- Fig. 9: in einer perspektivischen Ansicht eine Spannbacke bestehend aus Grundbacke und Aufsatzbacken und Kulissenstein,
- Fig. 10: in einer perspektivischen Ansicht eine weitere Ausführungsform für die Grundbacke und
- Fig. 11: in einer geschnittenen Ansicht die beiden Spannringe mit einem Rastbolzen.

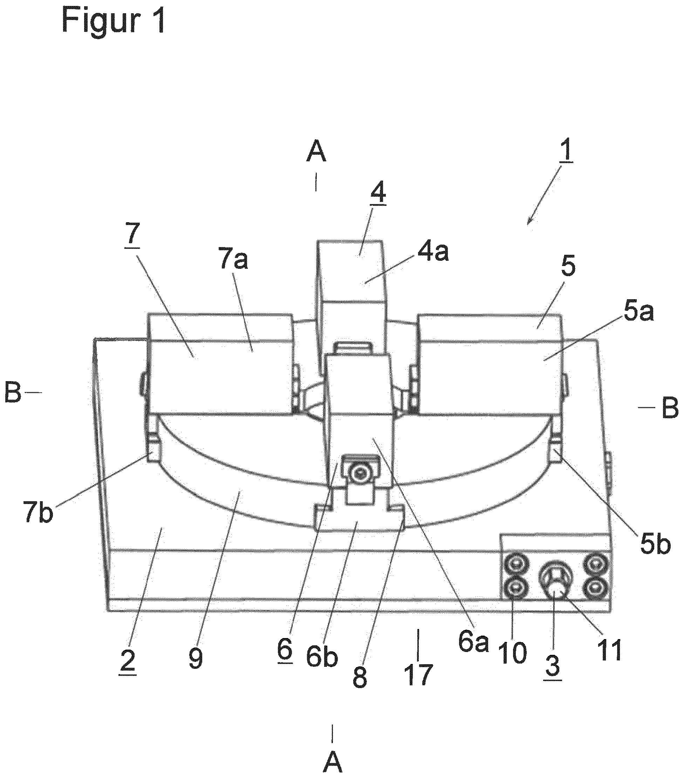

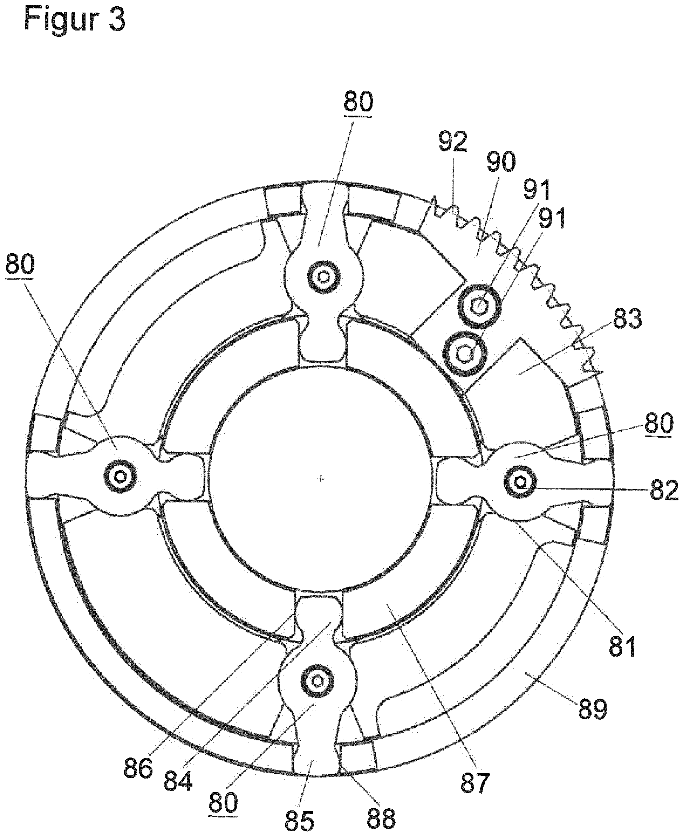

Figur 1 zeigt in einer perspektivischen Ansicht eine Vorrichtung 1 zum Spannen von Werkstücken. Die Vorrichtung 1 besteht aus einem Montagekörper 2 mit Verstelleinrichtung 3 und den Spannbacken 4, 5, 6, 7. Die Spannbacken 4, 5, 6, 7 bestehen jeweils aus einer Aufsatzbacke 4a, 5a, 6a, 7a sowie einer Grundbacke 4b, 5b, 6b, 7b. Die Spannbacken 4, 5, 6, 7 dienen dazu ein nicht dargestelltes Werkstück aufzunehmen und zu spannen. Die Spannung erfolgt hierbei erfindungsgemäß über alle vier Spannbacken 4, 5, 6, 7 gleichzeitig und nicht zeitversetzt, sodass die gleiche Festhaltekraft in den Spannebenen A-A und B-B erzeugt wird. Mithilfe der Verstellvorrichtung 3, wie in Figur 3 näher beschrieben, werden die Spannbacken 4, 5, 6, 7 radial bewegt. Die Spannbacken 4, 5, 6, 7 liegen hierbei jeweils in einer T-förmigen Nut 8 eines Grundkörpers 9 als Führung ein. Die Spannbacken 4, 5, 6, 7 sind hierbei jeweils rechtwinklig zueinander angeordnet, sodass zwei Spannebenen A-A und B-B vorliegen, um das Werkstück sicher zu halten. Der gesamte Aufbau der Vorrichtung 1 ist hierbei darauf ausgerichtet, dass diese beispielsweise mit niedriger Bauhöhe für Bearbeitungszentren eingesetzt werden kann. Hierbei kann es sich beispielsweise um Fräsbänke handeln, wobei auf dem Frästisch die Vorrichtung 1 festgelegt wird und nach dem Einspannen des zu bearbeitenden Werkstückes mithilfe der Spannbacke 4, 5, 6, 7 der Bearbeitungsvorgang gestartet werden kann. Das Einspannen des Werkstückes erfolgt beispielsweise mit einer Verstelleinrichtung 3, welche in einer Ausnehmung des Grundkörpers 2 einliegt und mithilfe von Schraubbolzen befestigt ist. Über einen Sechskant 11 wird eine Spindel, wie aus Figur 3 ersichtlich betätigt, die mithilfe eines Zapfens einen Treibring verdreht. Alternativ besteht die Möglichkeit, dass anstelle einer Gewindespindel ein Hydraulikzylinder eingesetzt wird, welcher die Tangentialkraft für die Drehbewegung des Treibringes erzeugt.

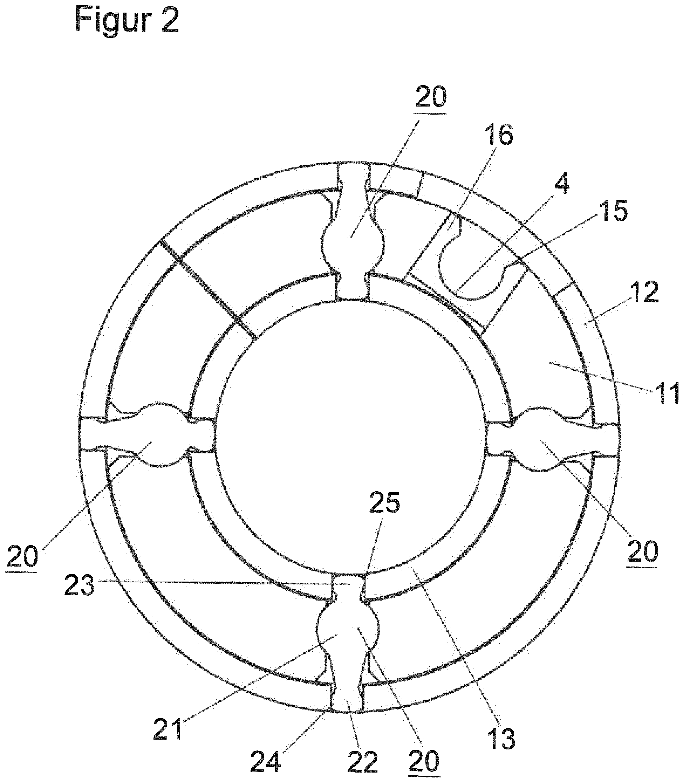

Figur 2 zeigt in einer Draufsicht die vormontierten Spannringe 12, 13 mit Treibring 11 und Koppelelementen 20. Ein Treibring 11 ist hierbei zwischen einem äußeren Spannring 12 und einem inneren Spannring 13 gelagert. Der Treibring 11 wird durch einen nicht dargestellten Zapfen der Verstelleinrichtung 3 verdreht, wobei der Zapfen in einer korrespondierenden Ausnehmung 14 einer Zapfenaufnahme 16 aufgenommen ist. Die Zapfenaufnahme 16 ist rund mit einer sich nach außen hin öffnenden Abschrägung 15 ausgebildet, damit der Zapfen der Verstellvorrichtung 3 ausreichend Bewegungsspielraum besitzt. Die Ausnehmung 14 ist hierbei Bestandteil der Zapfenaufnahme 16, welche wiederum in einer radialen Ausnehmung 17 des Treibringes 11 einliegt, sodass die Zapfenaufnahme 16 eine Radialbewegung ausführen kann.

Eine Verdrehung des Treibringes 11 wird hierbei über vier Koppelelemente 20 auf den inneren und äußeren Spannring 12, 13 übertragen. Die Koppelelemente 20 bestehen aus einem drehbar gelagerten Rundkörper 21 mit zwei radial hervorstehenden Anformungen 22, 23. Die Anformungen 22, 23 weisen eine unterschiedliche Länge auf, um eine gleichmäßige Kraftübertragung auf den inneren Spannring 13 beziehungsweise auf den äußeren Spannringen 12 zu übertragen. Durch die nach außen gerichtete Anformung 22 wird aufgrund der Drehbarkeit des Koppelelementes 20 mit einem längeren Hebel eine höhere Drehkraft auf den äußeren Spannring 12 übertragen, während durch die Anformung 23 mit einem deutlich verkürzten Hebelarm eine geringere Drehkraft auf den inneren Spannring 13 übertragen wird. Durch die unterschiedlichen Längen der Anformungen 22, 23 der Koppelemente 20 wird auf diese Weise sichergestellt, dass sowohl der äußere Spannring 12 als auch der innere Spannring 13 mit gleichen Drehkräften beaufschlagt wird. Die Anformungen 22, 23 liegen jeweils in einer Aufnahmetasche 24, 25 des äußeren Spannringes 12 beziehungsweise des inneren Spannringes 13 ein.

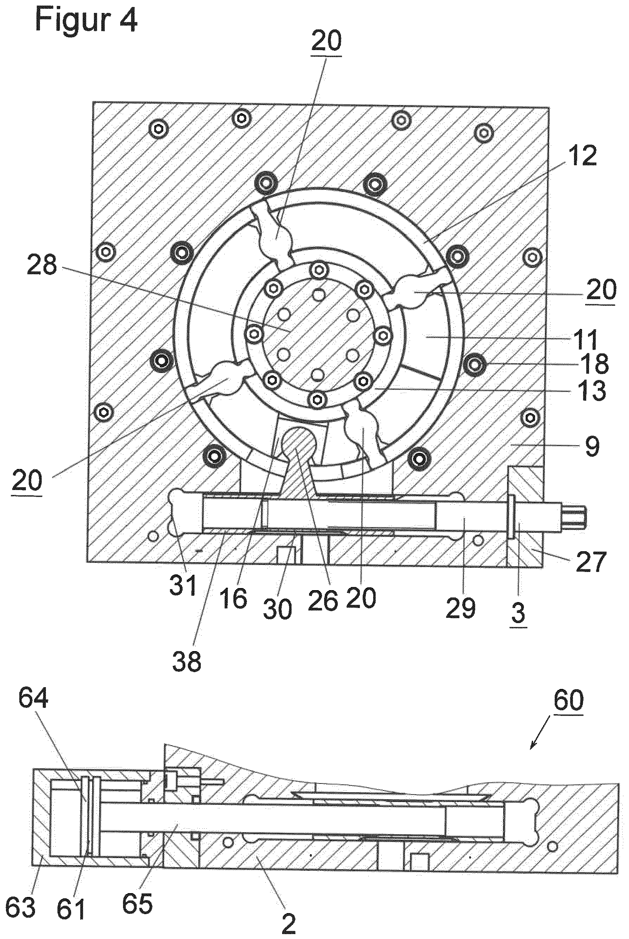

Normalerweise reicht bereits ein Koppelelement 20 aus, um die Verdrehung der Spannringe 12, 13 vorzunehmen, jedoch werden zur Vermeidung erhöhter Reibung der Spannringe 12, 13 mit dem Treibring 11 zwei oder wie gezeigt vier Koppelelemente 20 verwendet, welche jeweils um 90 Grad versetzt innerhalb des Treibringens 11 einliegen. Der Treibring 11 wird hierbei über den Zapfen der Verstellvorrichtung 3 und der Zapfenaufnahme 16 verdreht, sodass diese Verdrehung unmittelbar über die Koppelemente 20 auf die Spannringe 12, 13 übertragen werden kann. Durch die Drehbeweglichkeit der Koppelelemente 20 erfolgt bei einer Verdrehung des Treibringes 11 jeweils eine Verdrehung des äußeren Spannringes 12 beziehungsweise inneren Spannringes 13 in entgegengesetzter Richtung. Die Spannringe 12, 13 sind mit Bogensegmenten, wie aus Figur 4 ersichtlich auf der Rückseite versehen, die mithilfe von Kulissensteinen die Bewegung unmittelbar auf die Spannbacken 4, 5, 6, 7 übertragen. Die jeweils gegenüberliegenden Spannbacken 4, 6 und 5, 7 sind einem Spannring 12 oder 13 zugeordnet, sodass eine Spannung des Werkstückes in der Weise erfolgt, dass je nach Drehrichtung des Treibringes 11 zunächst alle gegenüberliegenden Spannbacken 4, 6 oder 5, 7 bis an das Werkstück herangefahren werden. Erst wenn die Spannbacken 4, 5, 6, 7 an dem Werkstück anliegen wird die Kraft anschließend gleichmäßig zum Andrücken der Spannbacken 4, 5, 6, 7 an das Werkstück aufgebaut. Hierdurch wird erreicht, dass am Werkstück an allen Seiten die gleiche Festhaltekraft entsteht.

Figur 3 zeigt in einer Draufsicht eine alternative Ausführungsform für den Treibring. Die zum Einsatz kommenden Koppelelemente 80 liegen in einer Ausnehmung 81 des Treibringes ein und sind drehbweglich gelagert, wobei die Koppelelemente 80 über eine Verschraubung 82 mit dem Treibring 83 verbunden sind. Die Koppelemente 80 weisen eine nach innen gerichtete kurze Anformung 84 und eine nach außen gerichtete längere Anformung 85 auf. Die Anformung 84 liegt in einer Ausnehmung 86 des inneren Spannringes 87 und die Anformung 85 in einer Ausnehmung 88 des äußeren Spannringes 89 ein. Diese Anordnung entspricht weitestgehend der Ausgestaltung gemäß Figur 2, wobei im wesentlichen der Treibring 83 verändert worden ist. Der Treibring 83 ist mit einem Zahnsegment 90 ausgestattet, welches mithilfe von Schraubbolzen 91 mit dem Treibring 83 verschraubt ist. Das Zahnsegment 90 ist mit einer Verzahnung 92 ausgestattet, in welche beispielsweise eine Zahnstange eingreifen kann, um eine Verdrehung des Treibringes 83 vorzunehmen. Die Verdrehung des Treibringes 83 führt zu einer Drehbewegung der Koppelelemente 80 und damit zu einer Kraftübertragung durch die Anformung 84, 85 auf den inneren Spannring 87 und den äußeren Spannring 89.

Figur 4 zeigt in einer geschnittenen Ansicht die Spannringe 12, 13 mit Treibring 11 und Verstelleinrichtung 3. Die Lage und Darstellung der Spannringe 12, 13 und des Treibringes 11 mit Koppelelementen 20 entspricht der Figurendarstellung 2, wobei die gesamte Anordnung in den Grundkörper 9 aufgenommen ist. Der Grundkörper 9 ist mit einer Vielzahl von Schraubbolzen 18 mit dem Montagekörper 2 verbunden.

Die Verstelleinrichtung 3 besteht aus einer Spindel 29 mit einem Gewindeabschnitt 30, welche in einer Ausnehmung 31 verdrehbar aber ortsfest gelagert ist. Über eine Gewindehülse 38, welche mit einem Zapfen 26 verbunden ist erfolgt die Bewegung des Treibringes 11. Durch die Gewindehülse 38 wird der Zapfen 26 axial in Richtung der Spindel verfahren. Der Zapfen 26 liegt hierbei in der Zapfenaufnahme 16, sodass eine Spindelbewegung unmittelbar eine Verdrehung des Treibringes 11 hervorruft. Die Verdrehung des Treibringes 11 wird über die Koppelelemente 20 auf den äußeren Spannring 12 beziehungsweise inneren Spannring 13 übertragen, welche im weiteren mit den Spannbacken 4, 5, 6, 7 gekoppelt sind.

Die Verstellvorrichtung 3 und deren Spindel 29 wird hierbei über eine Drehführung 27 mit dem Montagekörper 2 mithilfe von Schraubbolzen befestigt. Die Führung und Drehlagerung des inneren Spannringes 13 und damit auch gleichzeitig des Treibringes 11 und des äußeren Spannringes 12 erfolgt über das mit dem Montagekörper 2 verbundene Zentrierelement 28.

Die untere Figurenhälfte 3 zeigt in einem Teilschnitt eine Verstelleinrichtung 60, welche aus einem Hydraulikzylinder 61 besteht und zur Betätigung eines nicht dargestellten Zapfens vorgesehen ist. Der Zapfen ist wiederum zur Umsetzung der Linearbewegung des Hydraulikzylinders 61 in eine Drehbewegung des Treibringes 11 vorgesehen. Anstelle einer Spindel nach dem ersten Ausführungsbeispiel wird in diesem Fall ein Hydraulikzylinder 61 verwendet, welcher in einem abgedichteten Gehäuse 63 angeordnet ist und durch Ein- und Ausgangsventile linear innerhalb des Gehäuses 63 bewegt werden kann. Die Ein- und Austrittventile sind in dieser Schnittdarstellung nicht gezeigt. Der Hydraulikzylinder 61 verfügt über einen Kolben 64 und einen Stößel 65, welcher unmittelbar in Wirkverbindung mit dem Zapfen steht. Der Hydraulikzylinder 61 mit Gehäuse 63 ist hierbei mit dem Montagekörper 2 verbunden.

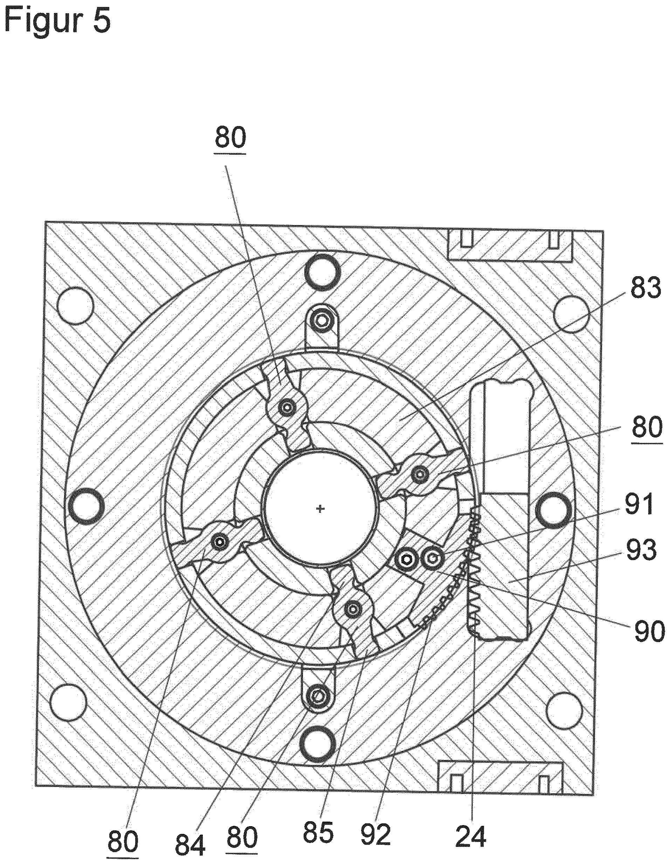

Figur 5 zeigt in einer geschnittenen Ansicht eine weitere alternative Ausführungsform mit einem Treibring 83, welcher mit einem Zahnsegment 90 ausgestattet ist, wie aus der Figur 3 ersichtlich. Der Treibring 83 wird in diesem Fall durch eine Zahnstange 93 angetrieben, die eine korrespondierende Verzahnung 94 zu dem Zahnsegment 90 mit Verzahnung 92 aufweist. Im wesentlichen entspricht die Zeichnungsfigur 5 der Figur 4 mit dem alternativen Antrieb des Treibringes 83.

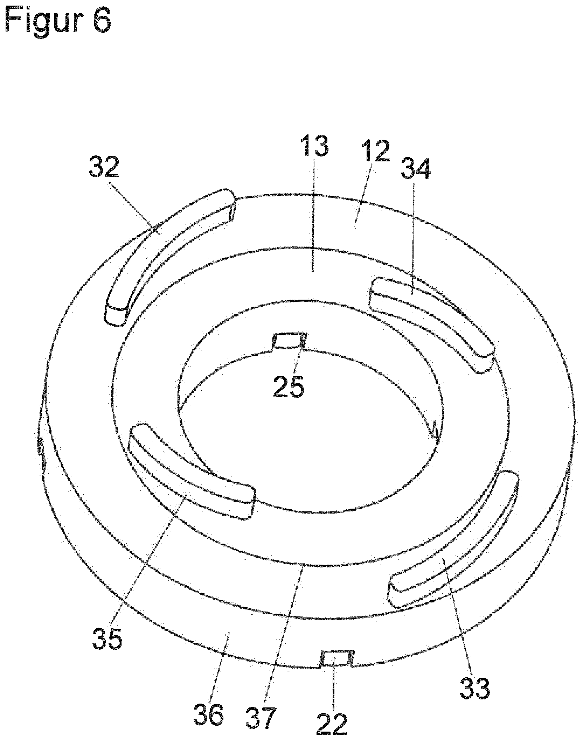

Figur 6 zeigt in einer perspektivischen Ansicht die Spannringe 12, 13 mit Bogensegmenten 32, 33 und 34, 35. Der äußere Spannring 12 und der innere Spannring 13 sind in dieser perspektivischen Darstellung von der diametral abgewandten Seite gegenüber Figur 3 dargestellt, insofern sind die Koppelelemente 20 nicht ersichtlich. In der Figur 4 werden die Spannringe 12, 13 lagerichtig in der Position gezeigt, wie sie in der Vorrichtung eingebaut sind, das heißt die Koppelelemente 20 liegen innerhalb des Treibringes 11 ein und dieser befindet sich unterhalb der beiden Spannringe 12, 13 in einer entsprechenden Ausnehmung beider Spannringe 12, 13. Aus diesem Grund sind die Spannringe 12, 13 in der Figur 4 über ihren gesamten Innen- und Außendurchmesser dargestellt. Zur Bewegung der Spannbacken 4, 5, 6, 7 sind die Bogensegmente 32, 33, 34, 35 gegenüber der Umfangsfläche 36 des äußeren Spannringes 12 und der Umfangsfläche 37 des inneren Spannringes 13 unter einem Winkel angeordnet.

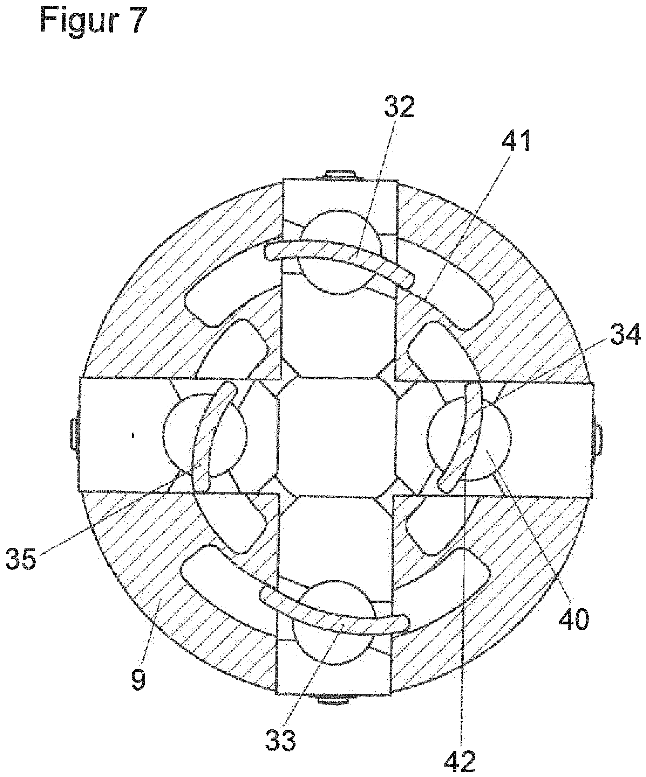

Figur 7 zeigt in einer geschnittenen Draufsicht die Bogensegmente 32, 33, 34, 35 mit jeweils einem Kulissenstein 40. Die Spannringe 12, 13 und der Treibring 11 werden durch den Grundkörper 9 verdeckt. Der Grundköper 9 weist Ausnehmungen 41 auf, in denen sich die Bogensegmente 32, 33, 34, 35 verdrehbar bewegen können. Die Kulissensteine 40 selbst weisen einen schlitzförmigen Durchbruch 42 auf, der dem Krümmungsverlauf der Bogensegmente 32, 33, 34, 35 angepasst ist, sodass bei einer Drehbewegung der Bogensegmente 32, 33, 34, 35 der Kulissenstein 40 radial nach innen oder nach außen bewegbar ist. Die radiale Bewegung der Kulissensteine 40 wird hierbei unmittelbar auf die Grundbacken 4b, 5b, 6b, 7b übertragen, wie aus der Figur 6 und 7 ersichtlich.

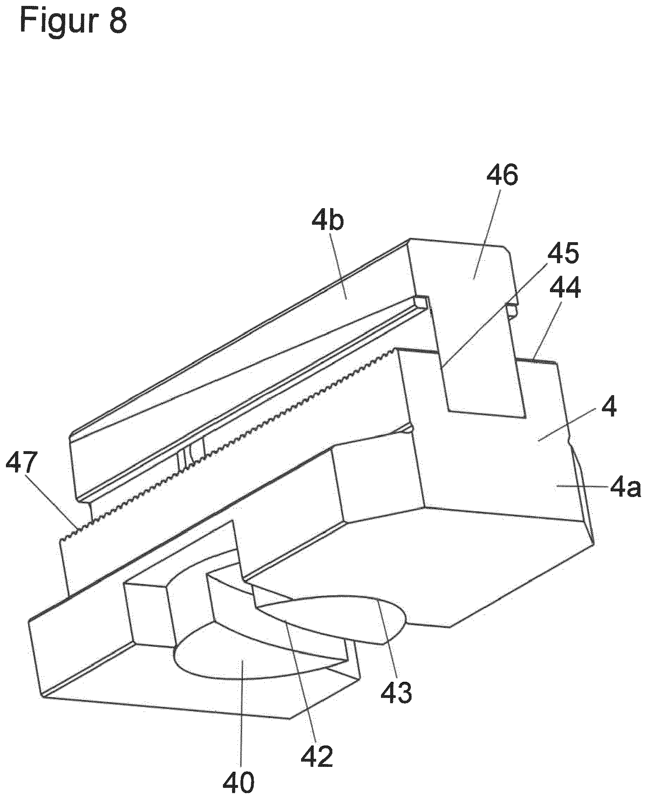

Figur 8 zeigt in einer perspektivischen Ansicht beispielsweise die Grundbacke 4a zur Spannbacke 4, wobei die Spannbacken 4, 5, 6, 7 identisch aufgebaut sind. Der Kulissenstein 40 liegt in einer Ausnehmung 43 der Grundbacke 4a ein und ermöglicht aufgrund der runden Form eine Verdrehung des Kulissensteins 40 innerhalb der Ausnehmung 43. Die Verdrehung des Kulissensteins 40 geht einher mit der Bewegung der Bogensegmente 32, 33, 34, 35 gemäß Figur 5, wodurch eine Umsetzung der Drehbewegung in eine Radialbewegung möglich ist, weil durch die Verdrehung des Kulissensteins 40 durch die unter einem Winkel angeordneten Bogensegmente 32, 33, 34, 35 gegenüber den Spannringen 12, 13 über den Kulissenstein 40 die Grundbacke 4a eine radiale Bewegung erfährt. Gleiches gilt selbstverständlich für die weiteren Grundbacken 5a, 6a, 7a. Die Grundbacke 4a besitzt einen T-förmigen Querschnitt und liegt in dem Grundkörper 9 innerhalb einer T-förmigen Nut 8 ein. Somit kann die Grundbacke 4a sich nur radial bewegen. Auf der Oberseite 44 ist eine rechteckförmige Ausnehmung 45 vorhanden, in der ein Klemmelement 46 einliegt. Die Oberseite 44 der Grundbacke 4a ist im weiteren mit einer Verzahnung 47 ausgestattet, welche mit einer korrespondierenden Verzahnung der Aufsatzbacke 4b zusammenwirkt. Auf diese Weise ist es möglich die Aufsatzbacke 4b gegenüber der Grundbacke 4a radial zu versetzen und damit die Möglichkeit zu schaffen unterschiedlich große Werkstücke einzuspannen. Die Verbindung von Grundbacke 4a und Aufsatzbacke 4b ist aus Figur 7 ersichtlich.

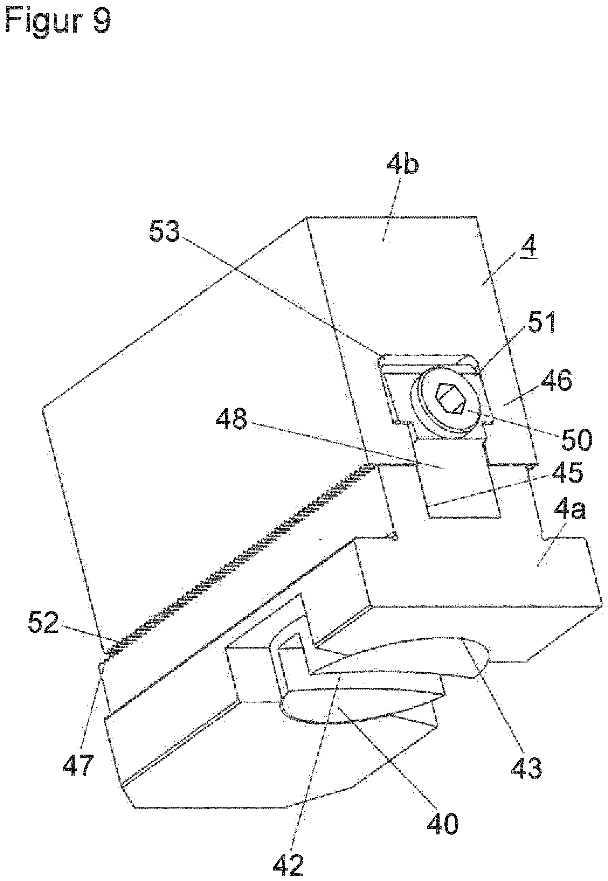

Figur 9 zeigt in einer perspektivischen Ansicht eine Spannbacke 4, bestehend aus Grundbacke 4a und Aufsatzbacke 4b, wie sie beispielsweise aus Figur 1 bekannt ist. Die Darstellung der Spannbacke 4 entspricht hierbei der rückseitigen Darstellung mit Schraubbolzen 50, welcher zur Verbindung der Aufsatzbacke 4b mit der Grundbacke 4a benötigt wird. Gegenüber herkömmlichen Methoden ist die Aufsatzbacke 4b mit der Grundbacke 4a nicht durch senkrecht zur Spannebene verwendete Schraubbolzen verbunden, sondern wird durch die Schraubbolzen 50 und ein Klemmelement 51 festgelegt. Die Aufsatzbacke 4b greift hierbei mit einer korrespondierenden Verzahnung 52 in die Verzahnung 47 der Grundbacke 4a ein, um die radiale Position der Aufsatzbacke festzulegen, welche über die beiden Verzahnung 47, 52 radial versetzt werden kann. Das Klemmelement 51 besteht in diesem Fall aus einem Keilelement, welches zwischen Grundbacke 4a und Aufsatzbacke 4b durch die Schraubbolzen 50 festgelegt wird. Das Klemmelement 51 besitzt einen annähernd T-förmigen Querschnitt und liegt in einer T-förmigen Ausnehmung 53 der Aufsatzbacke 4b ein. Die Verlängerung 48 des Klemmelementes 51 ist hierbei mit der Grundbacke 4a durch senkrecht zur Klemmebene angeordnete Schaubbolzen verschraubt, sodass das Klemmelement 51 mit seinem T-förmigen Querschnitt in der T-förmigen Ausnehmung 53 der Aufsatzbacke 4b verspannt werden kann. Durch die Spannung mithilfe der Schraubbolzen 50 wird die Aufsatzbacke 4b mit der Grundbacke 4a unter Berücksichtigung der vorhandenen Verzahnung 47, 52 festgelegt, wobei durch Lösen des Schraubbolzens 50 ein Versatz der Aufsatzbacke 4b möglich ist und nach erfolgtem Anziehen des Schraubbolzens 50 eine feste Verbindung hergestellt werden kann. Das Klemmelement 51 in Form eines Keilelementes liegt hierbei einerseits in der Ausnehmung 45 der Grundbacke 4a und andererseits in der Ausnehmung 53 der Aufsatzbacke 4b ein, sodass aufgrund seiner keilförmigen Form bei einem Verspannen mithilfe des Schraubbolzens 50 die Aufsatzbacke 4b in Richtung auf die Grundbacke 4a verspannt wird.

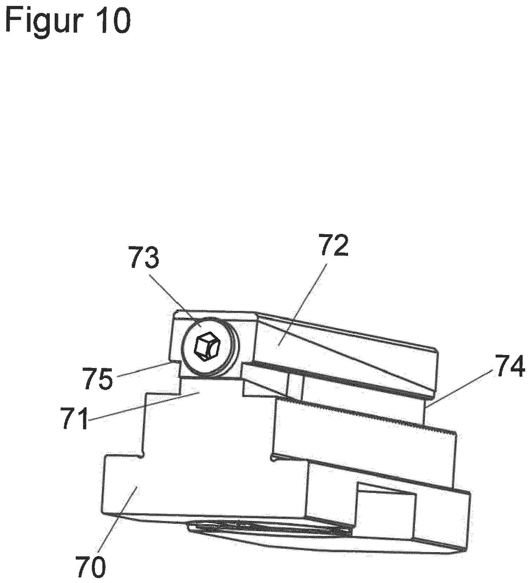

Figur 10 zeigt in einer perspektivischen Ansicht eine weitere Alternative, um eine Verbindung einer Grundbacke 70 mit einer nicht dargestellten Aufsatzbacke vorzunehmen. Die Grundbacke besitzt einen T-förmigen Querschnitt mit einem keilförmigen Ansatz 71. Auf diesem Ansatz kommt ein Klemmelement 72 zu liegen, welches mithilfe eines Befestigungsbolzen 73 gegenüber der Grundbacke 70 axial verschieblich ist und somit über die beiden schiefen Ebenen eine Verspannung zwischen Grundbacke 70 und Aufsatzbacke ermöglicht. Die Aufsatzbacke liegt hierbei mit ihrer T-förmigen Ausnehmung an den Kanten 74, 75 des Klemmelementes 72 an und wird durch Verlagerung des Klemmelementes 72 mit der Grundbacke 70 verspannt. Bei dieser Lösung besteht keine Notwendigkeit die Grundbacke 70 mit einem korrespondierenden Keilelement zu verschrauben, weil dieses unmittelbar einstückig mit der Grundbacke 70 verbunden ist.

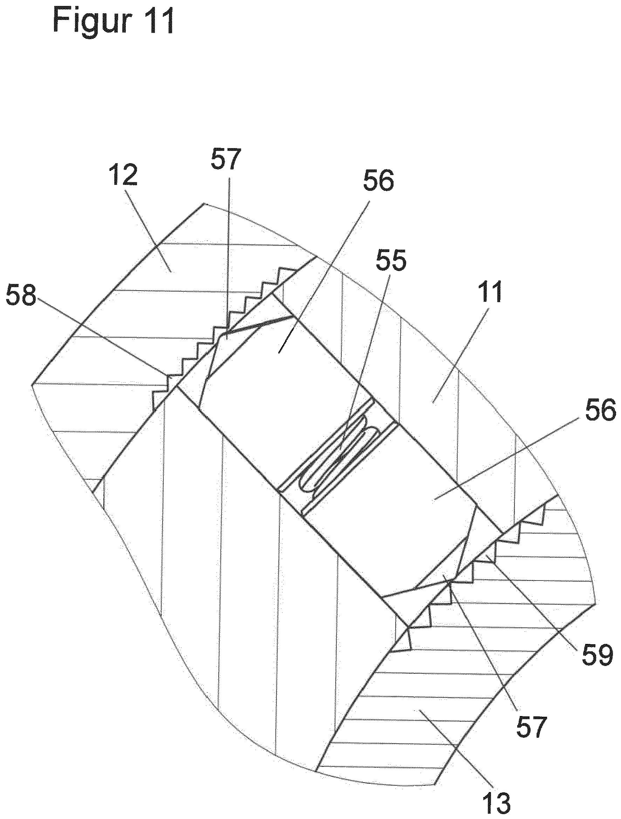

Figur 11 zeigt in einer geschnittenen Ansicht die beiden Spannringe 12, 13 mit dazwischen angeordnetem Treibring 11 und einem ebenfalls im Treibring 11 radial gelagerten Rastbolzen 55. Der Rastbolzen 55 besteht aus zwei identischen Endstücken 56 mit einer dachförmigen Spitze 57, welche in eine korrespondierende Rastung 58, 59 einerseits des äußeren Spannringes 12 und andererseits des inneren Spannringes 13 eingreift.

Mithilfe des Rastbolzens 55 kann eine gewünschte Position der beiden Spannringe 12, 13 zueinander arretiert werden. Aufgrund einer bestehenden Asymmetrie des zu bearbeitenden Werkstückes kann es dazu kommen, dass die gegenüberliegenden Spannbacken 4, 6 und 5, 7 einen unterschiedlichen Abstand zum Zentrum der Vorrichtung 1 aufweisen. Mithilfe des Rastbolzens 55 kann diese Position arretiert werden und nach Öffnen der Spannbacken 4, 5, 6, 7 das Werkstück entnommen werden, ohne dass die Position beider Spannringe 12, 13 geändert wird. Bei Einlegen eines neuen Werkstückes kann daher mit wenigen Umdrehungen das Werkstück erneut gespannt werden. Nach Ende der Bearbeitungsserie werden die Spannbacken vollständig zurückgefahren, um die Grundstellung der Spannringe 12, 13 zu erreichen, sodass der Rastbolzen 55 in eine Position der Rastungen 58, 59 des äußeren Spannringes 12 beziehungsweise des inneren Spannringes 13 einrastet, die der Normalstellung entspricht.

Durch den Rastbolzen 55 wird das Lösen und Spannen der Werkstücke mithilfe der vier Spannbacken 4, 5, 6, 7 somit erleichtert, weil nur wenige Umdrehungen der Verstellvorrichtung 3 notwendig sind.

### Bezugszeichenliste

- 1: Vorrichtung
- 2: Montagekörper
- 3: Verstelleinrichtung
- 4: Spannbacke
- 4a: Aufsatzbacke
- 4b: Grundbacke
- 5: Spannbacke
- 5a: Aufsatzbacke
- 5b: Grundbacke
- 6: Spannbacke
- 6a: Aufsatzbacke
- 6b: Grundbacke
- 7: Spannbacke
- 7a: Aufsatzbacke
- 7b: Grundbacke
- 8: Nut
- 9: Grundkörper
- 11: Treibring
- 12: Spannring
- 13: Spannring
- 14: Zapfenausnehmung
- 15: Abschrägung
- 16: Zapfenaufnahme
- 17: Ausnehmung
- 18: Schraubbolzen
- 20: Koppelelement
- 21: Rundkörper
- 22: Anformung
- 23: Anformung
- 24: Aufnahmetasche
- 25: Aufnahmetasche
- 26: Zapfen
- 27: Drehführung
- 28: Zentrierelement
- 29: Spindel
- 30: Gewindeabschnitt
- 31: Ausnehmung
- 32: Bogensegment
- 33: Bogensegment
- 34: Bogensegment
- 35: Bogensegment
- 36: Umfangsfläche
- 37: Umfangsfläche
- 38: Gewindehülse
- 40: Kulissenstein
- 41: Ausnehmung
- 42: Durchbruch
- 43: Ausnehmung
- 44: Oberseite
- 45: Ausnehmung
- 46: Klemmelement
- 47: Verzahnung
- 48: Verlängerung
- 50: Schraubbolzen
- 51: Klemmelement
- 52: Verzahnung
- 53: Ausnehmung
- 55: Rastbolzen
- 56: Endstück
- 57: Spitze
- 58: Rastung
- 59: Rastung
- 60: Verstelleinrichtung
- 61: Hydraulikzylinder
- 63: Gehäuse
- 64: Kolben
- 65: Stößel
- 70: Grundbacke
- 71: Ansatz
- 72: Klemmelement
- 73: Befestigungsbolzen
- 74: Kante
- 75: Kante
- 80: Koppelelement
- 81: Ausnehmung
- 82: Verschraubung
- 83: Treibring
- 84: Anformung
- 85: Anformung
- 86: Ausnehmung
- 87: Spannring
- 88: Ausnehmung
- 89: Spannring
- 90: Zahnsegment
- 91: Schraubbolzen
- 92: Verzahnung
- 93: Zahnstange
- 94: Verzahnung

## Patentansprüche

1. Vorrichtung (1) zum Spannen von Werkstücken beliebiger Spannformen, insbesondere für Bearbeitungszentren, umfassend zumindest einen Grundkörper (9) mit über eine Spindel (28) oder einen Hydraulikzylinder (61) verstellbaren Spannbacken (4, 5, 6, 7), welche in einer Führung einliegend radial beweglich angeordnet sind,
**dadurch gekennzeichnet,**
**dass** eine radiale Verstellung der Spannbacken (4, 5, 6, 7) über zwei Spannringe (12, 13, 87, 89) erfolgt, welche relativ zueinander verdrehbar angeordnet sind, wobei eine Kraftübertragung von einem Treibring (11, 83) durch mindestens ein Koppelelement (20, 80) erfolgt.

2. Vorrichtung (1) nach Anspruch 1,
**dadurch gekennzeichnet,**
**dass** mindestens zwei oder mehrere Koppelelemente (20, 80) jeweils gleichmäßig in einem Winkelabstand versetzt zueinander zur Kraftübertragung vorgesehen sind.

3. Vorrichtung (1) nach Anspruch 1 oder 2,
**dadurch gekennzeichnet,**
**dass** die Koppelelemente (20, 80) in einer Ausnehmung des Treibringes (11, 83) einliegen und mit zwei radial hervorstehenden Anformungen (22, 23, 84, 85) in Aufnahmetaschen (24, 25) der Spannringe (12, 13) eingreifen, wobei die Anformung (22, 23, 84, 85) diametral entgegengesetzt unter einem Winkel von 180 Grad angeordnet sind.

4. Vorrichtung (1) nach einem der Ansprüche 1, 2 oder 3,
**dadurch gekennzeichnet,**
**dass** die Koppelelemente (20, 80) mit jeweils zwei Anformungen (22, 23, 84, 85) mit unterschiedlicher radialer Länge ausgestattet sind, und/oder dass die zum Mittelpunkt gerichtete Anformung (22, 84) kürzer und die vom Mittelpunkt weggerichtete Anformung (23, 85) länger ausgebildet ist.

5. Vorrichtung (1) nach einem der Ansprüche 1 bis 4,
**dadurch gekennzeichnet,**
**dass** das Längenverhältnis der Anformung (22, 23, 84, 85) 1:2 oder 1:3 beträgt.

6. Vorrichtung (1) nach einem der Ansprüche 1 bis 5,
**dadurch gekennzeichnet,**
**dass** der Treibring (11, 83) in zwei Ausnehmungen der Spannringe (12, 13, 87, 89) einliegt.

7. Vorrichtung (1) nach einem der Ansprüche 1 bis 6,
**dadurch gekennzeichnet,**
**dass** der Treibring (11, 83) über einen Zapfen (26) der Verstelleinrichtung (3) verdrehbar ist, welcher in einer Zapfenaufnahme (16) einliegt, welche in einer radialen Ausnehmung (17) des Treibringes (11, 83) einliegt und die Bewegung des Treibringes (11, 83) über die Koppelelemente (20, 80) auf die Spannringe (12, 13, 87, 89) übertragbar ist, oder dass der Treibring (11, 83) über eine Verzahnung des Treibringes (11, 83) und einer korrespondierenden Verzahnung (92) einer Verstelleinrichtung bewegbar ist.

8. Vorrichtung (1) nach einem der Ansprüche 1 bis 7,
**dadurch gekennzeichnet,**
**dass** die Verstelleinrichtung aus einer Zahnstange (93) besteht, welche über eine Gewindespindel oder einem Hydraulikzylinder bewegbar ist, oder dass die Verstelleinrichtung (3) über eine Gewindespindel (29) oder einen Hydraulikzylinder (61) antreibbar ist und einen Zapfen (26, 62) aufweist, welcher axial zur Gewindespindel (29) oder den Hydraulikzylinder (61) bewegbar ist.

9. Vorrichtung (1) nach einem der Ansprüche 1 bis 8,
**dadurch gekennzeichnet,**
**dass** die Spannringe (12, 13, 87, 89) mit kreisförmigen Bogensegmenten (32, 33, 34, 35) bestückt sind, welche jeweils einem Kraftübertragungselement zugeordnet und gegenüber der Umfangsfläche der Spannringe (12, 13, 87, 89) unter einem Winkel angeordnet sind.

10. Vorrichtung (1) nach einem der Ansprüche 1 bis 9,
**dadurch gekennzeichnet,**
**dass** die Bogensegmente (32, 33, 34, 35) jeweils zur Führung eines Kulissensteins (40) als Kraftübertragungselement vorgesehen sind, welcher jeweils in einer Grundbacke (4b, 5b, 6b, 7b) der Spannbacken (4, 5, 6, 7) einliegt.

11. Vorrichtung (1) nach einem der Ansprüche 1 bis 10,
**dadurch gekennzeichnet,**
**dass** die Spannbacken (4, 5, 6, 7) aus einer Grundbacke (4b, 5b, 6b, 7b) und einer Aufsatzbacke (4a, 5a, 6a, 7a) bestehen, und/oder dass die Grundbacke (4b, 5b, 6b, 7b) und Aufsatzbacke (4a, 5a, 6a, 7a) eine T-Nut aufweisen, in welche zumindest ein Nutenstein eingreift.

12. Vorrichtung (1) nach einem der Ansprüche 1 bis 11,
**dadurch gekennzeichnet,**
**dass** eine Verbindung zwischen Grundbacke (4b, 5b, 6b, 7b) und Aufsatzbacke (4a, 5a, 6a, 7a) über ein Klemmelement (51) innerhalb der T-Nuten erfolgt, und/oder dass das Klemmelement (51, 72) aus einem Keilelement besteht, welches zwischen Grundbacke (4b, 5b, 6b, 7b) und Aufsatzbacke (4a, 5a, 6a, 7a) durch einen Schraubbolzen (50) festlegbar ist.

13. Vorrichtung (1) nach einem der Ansprüche 1 bis 12,
**dadurch gekennzeichnet,**
**dass** die Aufsatzbacke (4a, 5a, 6a, 7a) mit einer Verzahnung (52) oder Querkeile versehen ist, welche in einer korrespondierenden Verzahnung (47) der Grundbacke (4b, 5b, 6b, 7b) einliegen.

14. Vorrichtung (1) nach einem der Ansprüche 1 bis 13,
**dadurch gekennzeichnet,**
**dass** zwischen dem inneren und äußeren Spannring (12, 13) ein Rastbolzen (55) angeordnet ist, welcher aus zwei Endstücken (56) mit einer stirnseitigen Spitze (57) besteht, welche durch ein Federelement radial nach außen vorgespannt sind.

15. Vorrichtung (1) nach einem der Ansprüche 1 bis 14,
**dadurch gekennzeichnet,**
**dass** der innere und äußere Spannring (12, 13) mit Rastungen (58, 59) auf der einander zugewandten Umfangsfläche ausgestattet ist, in welche der Rastbolzen (55) mit seinen Spitzen (57) einliegt.
